(19)

(11) EP 3 176 963 B1

(12) FASCICULE DE BREVET EUROPEEN

(45) Date de publication et mention de la délivrance du brevet: **31.07.2019 Bulletin 2019/31**

(51) Int Cl.: ***H04B 10/116*** *(2013.01)*

(21) Numéro de dépôt: **16202044.0**

(22) Date de dépôt: **02.12.2016**

# (54) DISPOSITIF D'EMISSION D'UN SIGNAL LUMINEUX MODULE DE TYPE SIGNAL LI-FI

VORRICHTUNG ZUM AUSSTRAHLEN EINES LEUCHTSIGNALS, MODUL VOM SIGNAL-TYP LI-FI

DEVICE FOR TRANSMITTING A MODULATED LIGHT SIGNAL SUCH AS A LI-FI SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA MD**

(30) Priorité: **03.12.2015 FR 1561820**

(43) Date de publication de la demande: **07.06.2017 Bulletin 2017/23**

(73) Titulaire: **Oledcomm**
**78140 Velizy Villacoublay (FR)**

(72) Inventeurs:
- **TOPSU, Suat**
  **78000 VERSAILLES (FR)**
- **DOMINGUEZ-GONZALEZ, Carlos**
  **92310 Sevres (FR)**
- **PEREZ OLIVAS, Huetzin**
  **78000 VERSAILLES (FR)**
- **GARCIA-MARQUEZ, Jorge**
  **78180 MONTIGNY LE BRETONNEUX (FR)**

(74) Mandataire: **Lavaud, Thomas et al**
**Cabinet Boettcher**
**16, rue Médéric**
**75017 Paris (FR)**

(56) Documents cités:
**EP-A1- 2 874 472**
**US-A1- 2015 288 453**
**US-B1- 6 198 230**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 176 963 B1

Printed by Jouve, 75001 PARIS (FR)

## Description

L'invention concerne le domaine des dispositifs d'émission de signaux lumineux modulés de type signaux Li-Fi.

ARRIERE PLAN DE L'INVENTION

L'utilisation de la technologie Li-Fi (pour « Light Fidelity ») pour mettre en oeuvre une communication sans fil présente de nombreux avantages dont la disponibilité du spectre optique et l'absence d'interférences électromagnétiques.

De plus, grâce notamment au développement de diodes électroluminescentes (LED) présentant des capacités de commutation très importantes et de photodiodes présentant des temps de réponse très rapides, on peut émettre et recevoir avec le Li-Fi des données avec un débit nettement plus important que le débit offert par exemple par la technologie WiFi (pour « Wireless Fidelity »).

La technologie Li-Fi est ainsi parfaitement adaptée pour transmettre et recevoir de la musique, des vidéos, des données internet, des données de mesure (température, humidité, luminosité, etc.), des alarmes (incendie, présence de vapeurs toxiques, intrusion, etc.), des données de géolocalisation, pour connecter en réseau des capteurs ou d'autres types d'appareils, etc.

Il semble particulièrement judicieux de déployer la technologie Li-Fi en munissant des systèmes d'éclairage public de lampes à diodes électroluminescentes (lampes à LED), et en utilisant les diodes électroluminescentes des lampes à LED pour émettre des signaux Li-Fi. On peut par exemple équiper de lampes à LED des lampadaires quelconques, extérieurs ou intérieurs, des systèmes d'éclairage dans des gares, des aéroports, des supermarchés, des musées, etc. Le brevet US2015288453 divulgue un dispositif de type Li-Fi contenant un redresseur et un gradateur ainsi qu'un dispositif de contrôle qui détermine l'amplitude de signaux de contrôle pour moduler la tension à l'entrée de plusieurs LEDs.

Les concepteurs des émetteurs de signaux Li-Fi, et notamment des lampes à LED utilisées pour émettre des signaux Li-Fi, cherchent bien sûr à réduire les coûts de développement et de fabrication de ces émetteurs, ainsi que leur masse et leur encombrement pour faciliter leur intégration.

OBJET DE L'INVENTION

L'invention a pour objet de réduire le coût, la masse et l'encombrement d'un émetteur de signaux Li-Fi tel qu'une lampe à LED.

RESUME DE L'INVENTION

En vue de la réalisation de ce but, on propose un dispositif d'émission d'un signal lumineux modulé de type signal Li-Fi, comportant :

- des moyens de connexion à une source externe d'une tension d'alimentation alternative ;
- un gradateur et un redresseur utilisés pour transformer la tension d'alimentation alternative en une tension porteuse analogique et d'amplitude réglable ;
- des moyens de traitement destinés à piloter le gradateur pour régler l'amplitude de la tension porteuse et à générer un signal électrique numérique de données ;
- des moyens de modulation destinés à moduler la tension porteuse en fonction du signal numérique de données pour générer une tension modulée ;
- au moins une diode électroluminescente comprenant des bornes entre lesquelles la tension modulée est appliquée pour générer le signal lumineux modulé.

Grâce au gradateur et au redresseur, le dispositif d'émission de l'invention génère, à partir de la tension d'alimentation alternative, une tension modulée et un courant permettant l'émission du signal lumineux modulé par la diode électroluminescente. Le dispositif d'émission de l'invention est ainsi adapté à émettre le signal lumineux modulé sans qu'il soit nécessaire d'équiper le dispositif d'émission de l'invention d'une alimentation classique comprenant un convertisseur alternatif-continu comportant des moyens d'isolation galvanique. Les moyens d'isolation galvanique sont généralement coûteux, lourds et encombrants : le dispositif d'émission de l'invention présente donc un coût de fabrication, une masse et un encombrement réduits. De plus, la conception d'une alimentation classique est relativement complexe et donc coûteuse. Le dispositif d'émission de l'invention est plus simple à dimensionner et présente un coût de développement réduit.

D'autres caractéristiques et avantages de l'invention ressortiront à la lecture de la description qui suit d'un mode de réalisation particulier, non limitatif de l'invention.

BREVE DESCRIPTION DES DESSINS

Il sera fait référence aux dessins annexés, parmi lesquels :

- la figure 1 représente une lampe à LED dans laquelle est intégré le dispositif d'émission d'un signal lumineux modulé de type signal Li-Fi selon un premier mode de réalisation de l'invention ;
- la figure 2 est un schéma fonctionnel du dispositif d'émission selon le premier mode de réalisation de l'invention ;
- la figure 3 représente une tension d'alimentation alternative du dispositif d'émission selon le premier mode de réalisation de l'invention ;

- la figure 4 représente une tension en sortie d'un gradateur du dispositif d'émission selon le premier mode de réalisation de l'invention ;
- la figure 5 représente une tension en sortie d'un redresseur du dispositif d'émission selon le premier mode de réalisation de l'invention ;
- la figure 6 représente une tension en sortie de moyens de filtrage du dispositif d'émission selon le premier mode de réalisation de l'invention ;
- la figure 7 représente un signal numérique de données transmis par le dispositif d'émission selon le premier mode de réalisation de l'invention ;
- la figure 8 représente un signal binaire basse fréquence utilisé pour transmettre par modulation de fréquence le signal numérique de données ;
- la figure 9 représente un signal binaire haute fréquence utilisé pour transmettre par modulation de fréquence le signal numérique de données ;
- la figure 10 représente un signal numérique modulé en fréquence ;
- la figure 11 représente une tension modulée appliquée aux bornes de diodes électroluminescentes du dispositif d'émission ;
- la figure 12 représente deux périodes de la tension modulée de la figure 11 ;
- la figure 13 est un schéma fonctionnel du dispositif d'émission selon un deuxième mode de réalisation de l'invention ;
- la figure 14 représente une tension d'alimentation alternative du dispositif d'émission selon le deuxième mode de réalisation de l'invention ;
- la figure 15 représente une tension en sortie d'un redresseur du dispositif d'émission selon le deuxième mode de réalisation de l'invention ;
- la figure 16 représente une tension en sortie d'un gradateur du dispositif d'émission selon le deuxième mode de réalisation de l'invention ;
- la figure 17 représente une tension en sortie de moyens de lissage du dispositif d'émission selon le deuxième mode de réalisation de l'invention ;
- la figure 18 représente un signal numérique de données transmis par le dispositif d'émission selon le deuxième mode de réalisation de l'invention ;
- la figure 19 représente un signal binaire basse fréquence et un signal binaire haute fréquence utilisés pour transmettre par modulation de fréquence le signal numérique de données ;
- la figure 20 représente un signal numérique modulé en fréquence ;
- la figure 21 représente un schéma d'une multiplication ou mélange d'une tension porteuse par le signal numérique modulé en fréquence ;
- la figure 22 représente une tension modulée appliquée aux bornes de diodes électroluminescentes du dispositif d'émission selon le deuxième mode de réalisation de l'invention.

DESCRIPTION DETAILLEE DE L'INVENTION

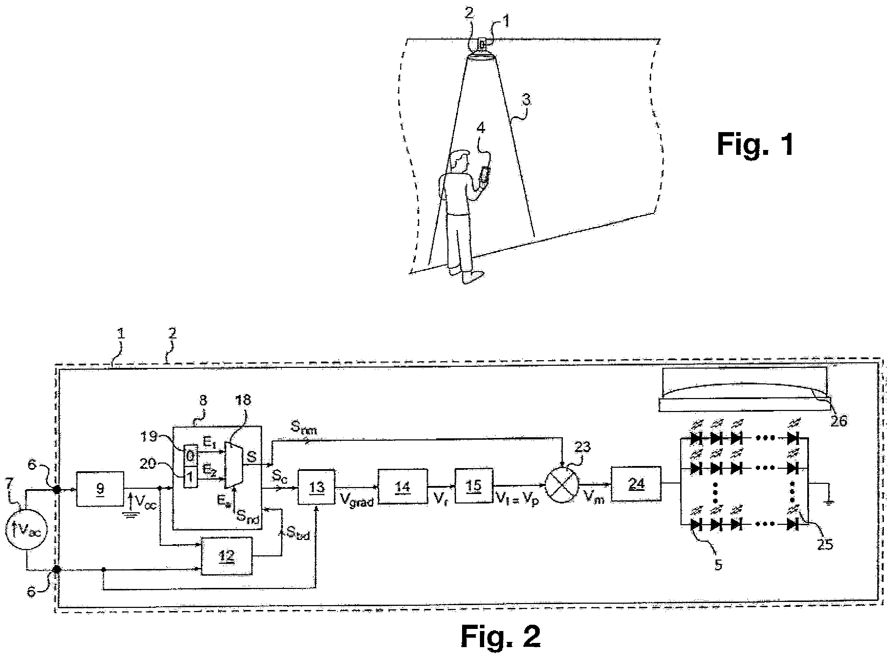

En référence à la figure 1, le dispositif d'émission d'un signal lumineux modulé de type signal Li-Fi selon un premier mode de réalisation de l'invention 1 est ici intégré dans une lampe à LED 2 fixée au plafond d'une pièce. La lampe à LED 2 est elle-même intégrée dans un réseau de communication Li-Fi comportant notamment une pluralité de lampes à LED interconnectées semblables à la lampe à LED 2.

La lampe à LED 2 est bien sûr utilisée pour éclairer la pièce en produisant de la lumière, ladite lumière étant essentiellement concentrée dans un cône lumineux 3.

La lampe à LED 2 est aussi utilisée pour émettre des signaux Li-Fi. Le cône lumineux 3 correspond à la couverture spatiale de l'émission des signaux Li-Fi. Les signaux Li-Fi émis par la lampe à LED 2 sont destinés à être reçus par des appareils de réception divers munis d'un récepteur Li-Fi et intégrés au réseau de communication Li-Fi. Sur la figure 1, un tel appareil de réception est un téléphone mobile 4, mais il pourrait aussi s'agir d'une tablette, d'un ordinateur portable, d'un appareil de mesure quelconque, d'une montre connectée, etc.

Les signaux Li-Fi émis par la lampe à LED 2 permettent de transmettre des données comprenant des données de position de la lampe à LED 2 ainsi qu'un identifiant de la lampe à LED 2, en l'occurrence une adresse MAC de la lampe à LED 2. L'adresse MAC constitue un identifiant unique qui identifie individuellement la lampe à LED 2. Les données transmises sont stockées dans une mémoire de la lampe à LED 2 avant leur transmission.

Les signaux Li-Fi émis par la lampe à LED 2 permettent aussi de transmettre des données différentes reçues via le réseau de communication telles que des données internet, des données de « streaming direct », et des données diverses stockées dans la mémoire de la lampe à LED 2.

Les données de position de la lampe à LED 2 et l'adresse MAC de la lampe à LED 2, ainsi que les données de position et les adresses MAC des autres lampes à LED du réseau de communication Li-Fi, sont utilisées par le téléphone mobile 4 pour déterminer sa propre position. Les lampes à LED du réseau de communication Li-Fi jouent ainsi le rôle de balises de géolocalisation.

En référence à la figure 2, le dispositif d'émission de l'invention 1 comporte tout d'abord une pluralité de diodes électroluminescentes 5 agencées selon une disposition matricielle de diodes électroluminescentes 5. Les diodes électroluminescentes 5 sont connectées en série et en parallèle. Les diodes électroluminescentes 5 permettent à la lampe à LED 2 d'éclairer la pièce et d'émettre les signaux Li-Fi en faisant clignoter les diodes électroluminescentes 5.

Le dispositif d'émission 1 comporte des moyens de connexion 6 qui permettent de connecter le dispositif d'émission 1 et donc la lampe à LED 2 directement à une source externe 7 d'une tension alternative d'alimentation $V_{ac}$, qui est en l'occurrence la tension du secteur. Le dispositif d'émission 1 est donc alimenté par une tension d'alimentation alternative $V_{ac}$ d'amplitude élevée, qui permet au dispositif d'émission 1 de mettre en oeuvre l'éclairage et l'émission des signaux Li-Fi.

Le fonctionnement du dispositif d'émission 1 est géré par des moyens de traitement qui comprennent un microcontrôleur 8. Le microcontrôleur 8 est alimenté par une tension d'alimentation continue $V_{cc}$ de faible amplitude, ici égale à 5 volts. La tension d'alimentation continue $V_{cc}$ est générée à partir de la tension alternative $V_{ac}$ par des moyens de conversion 9 qui comportent un limiteur de courant, un réseau de composants passifs et un régulateur linéaire.

La puissance électrique (et donc le courant et la tension) nécessaire à l'éclairage et à l'émission des signaux Li-Fi est issue de la tension d'alimentation alternative $V_{ac}$. Pour exploiter la tension d'alimentation alternative $V_{ac}$, le dispositif d'émission 1 comporte un détecteur de passage par zéro 12, un gradateur commandé par angle de phase 13, un redresseur 14 et des moyens de filtrage 15.

On note que les puissances mises en oeuvre dans le dispositif d'émission selon le premier mode de réalisation de l'invention 1 sont relativement importantes. Le gradateur 13 comporte des composants adaptés à des puissances importantes, et, en particulier, des triacs. Une large gamme de triacs est disponible sur le marché, ce qui présente un intérêt commercial et industriel non négligeable.

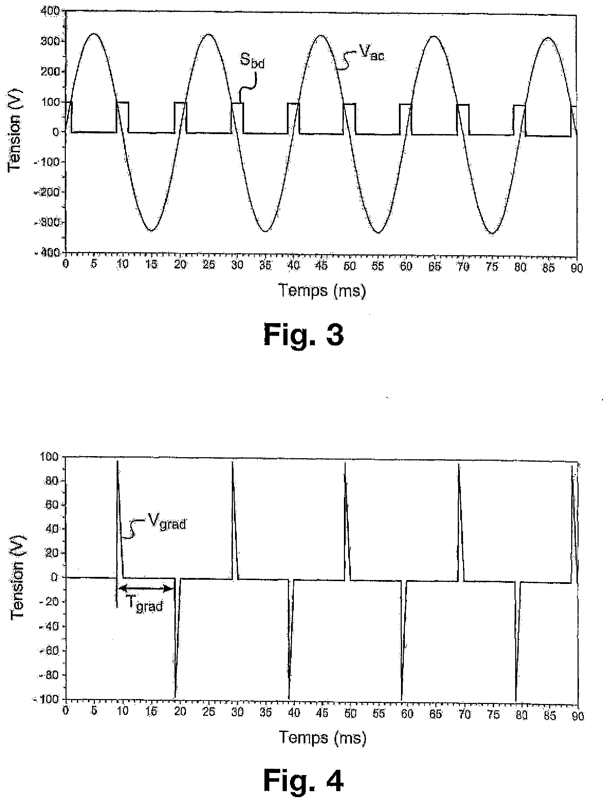

Le détecteur de passage par zéro 12, relié aux moyens de connexion 6, détecte les passages par zéro de la tension d'alimentation alternative $V_{ac}$ et génère un signal binaire de détection $S_{bd}$ qui présente un niveau haut au moment du passage à zéro de la tension d'alimentation alternative $V_{ac}$ et un niveau bas sinon. La tension d'alimentation alternative $V_{ac}$ et le signal binaire de détection $S_{bd}$ sont aussi visibles sur la figure 3.

Le signal binaire de détection $S_{bd}$ est transmis par le détecteur de passage par zéro 12 au microcontrôleur 8 qui génère à partir du signal binaire de détection $S_{bd}$ un signal de commande $S_c$ du gradateur 13 synchronisé sur les passages par zéro de la tension d'alimentation alternative $V_{ac}$. Le signal de commande $S_c$ du gradateur 13 définit un rapport cyclique d'une tension alternative $V_{grad}$ en sortie du gradateur 13, visible sur la figure 4, de période $T_{grad}$ égale à la moitié d'une période de la tension d'alimentation alternative $V_{ac}$.

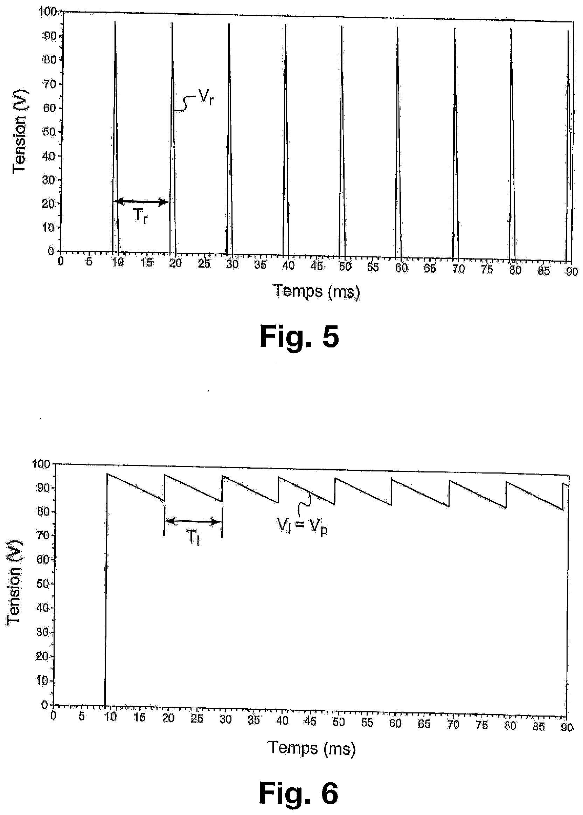

La tension alternative $V_{grad}$ en sortie du gradateur 13 est redressée par le redresseur 14 pour obtenir une tension redressée $V_r$ de période $T_r$, visible sur la figure 5. La période $T_r$ est égale à la période $T_{grad}$.

Dans la chaîne de traitement du premier mode de réalisation, le gradateur 13 est donc situé en amont du redresseur 14 : le gradateur 13 est plus proche de l'entrée de la chaîne de traitement (en l'occurrence, de la tension d'alimentation alternative Vac), et la sortie du gradateur 13 est reliée à l'entrée du redresseur 14.

La tension redressée $V_r$ est ensuite lissée par les moyens de filtrage 15 pour obtenir une tension lissée $V_l$ (visible sur la figure 6), suffisamment stable, de période $T_l$ égale à la période $T_{grad}$.

La tension lissée $V_l$ forme une tension porteuse analogique $V_p$ dont l'amplitude est réglable par le microcontrôleur 8 en faisant varier le rapport cyclique de la tension alternative $V_{grad}$ en sortie du gradateur 13 en utilisant $S_c$. La fréquence de la tension porteuse $V_p$ est égale au double de la fréquence de la tension d'alimentation alternative $V_{ac}$.

La tension porteuse $V_p$ est utilisée à la fois pour alimenter la disposition matricielle de diodes électroluminescentes 5 et donc pour éclairer la pièce, mais aussi pour porter le signal Li-Fi émis par la lampe à LED 2.

On note que la tension porteuse analogique $V_p$ permet d'obtenir un temps de transmission élargi par rapport à une situation où la porteuse utilisée serait un simple sinus redressé (semblable à la tension redressée $V_r$).

Un sinus redressé passe en effet périodiquement par zéro, et donc seule une portion réduite du sinus redressé (la moitié du signal environ) est utilisable pour transmettre des données.

Les traitements réalisés par le gradateur 13, le redresseur 14 et les moyens de filtrage 15 augmentent la portion de la tension porteuse analogique $V_p$ utilisable pour transmettre les données par rapport à un sinus redressé, et donc le temps de transmission disponible.

Le signal Li-Fi est un signal lumineux modulé contenant un signal numérique de données $S_{nd}$ généré par le microcontrôleur 8 à partir des données à émettre (qui comprennent ici, comme cela a été dit plus tôt, des données de position de la lampe à LED 2 et l'adresse MAC de la lampe à LED 2, ainsi que des données reçues via le réseau de communications). Les données $S_{nd}$ qui arrivent au sélecteur $E_a$ peuvent provenir d'une mémoire interne ou d'une source externe (il peut s'agir par exemple de données en streaming).

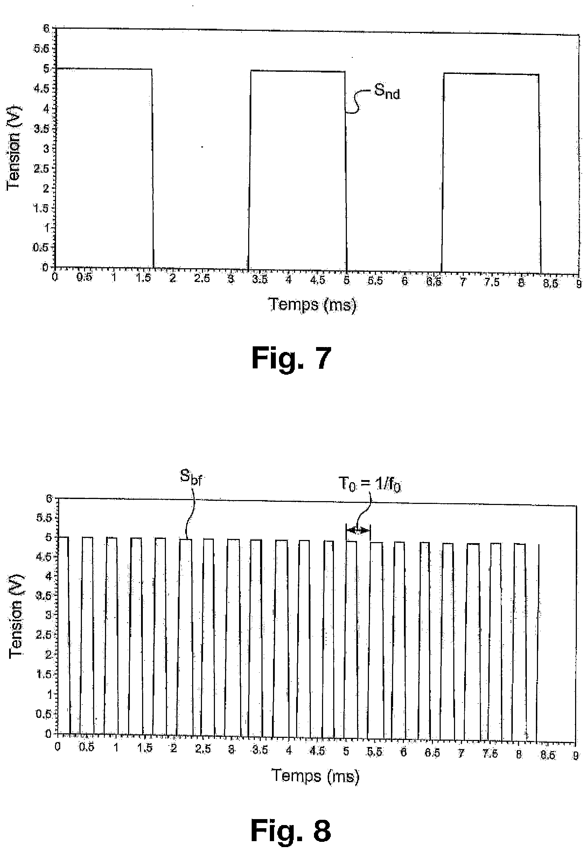

Le signal numérique de données $S_{nd}$, visible sur la figure 7, est formé par une succession d'états hauts et d'états bas. Le signal numérique de données $S_{nd}$ est transformé par le microcontrôleur 8 en un signal numérique modulé en fréquence $S_{nm}$ (modulation FSK, pour « Frequency-Shift Keying »).

Le microcontrôleur 8 exécute à cet effet un multiplexeur numérique 18 (visible sur la figure 2) présentant une première entrée de données $E_1$, une deuxième entrée de données $E_2$, une entrée d'adresse $E_a$ et une sortie S.

La première entrée de données $E_1$ pointe vers une première zone mémoire 19 dans laquelle est stockée une fréquence basse $f_0$ (ou fréquence « space ») :

$$f_0 = 1 / T_0.$$

La deuxième entrée de données $E_2$ pointe vers une deuxième zone mémoire 20 dans laquelle est stockée une fréquence haute $f_1$ (ou fréquence « mark ») :

$$f_1 = 1 / T_1.$$

Le signal numérique de données $S_{nd}$ est appliqué sur l'entrée d'adresse $E_a$.

Lorsque le signal numérique de données $S_{nd}$ présente un état bas, le multiplexeur numérique 18 sélectionne la première entrée de données $E_1$ et un signal binaire basse fréquence $S_{bf}$ de fréquence $f_0$ (visible sur la figure 8) est généré en sortie S du multiplexeur numérique 18.

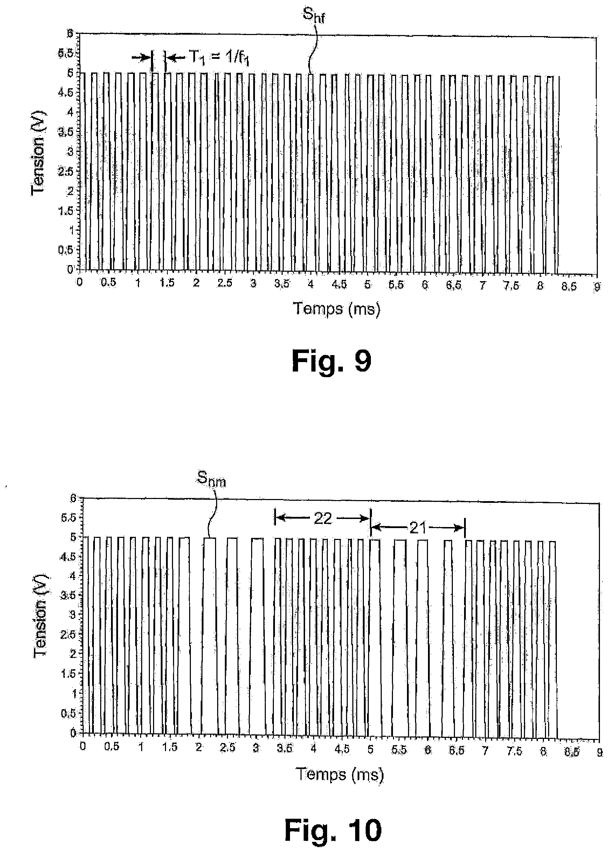

Lorsque le signal numérique de données $S_{nd}$ présente un état haut, le multiplexeur numérique 18 sélectionne la deuxième entrée de données $E_2$ et un signal binaire haute fréquence $S_{hf}$ de fréquence $f_1$ (visible sur la figure 9) est généré en sortie S du multiplexeur 18.

Le signal numérique modulé en fréquence $S_{nm}$ (visible aussi sur la figure 10) est ainsi produit par le multiplexeur numérique 18 et donc par le microcontrôleur 8. Une portion 21 du signal numérique modulé en fréquence $S_{nm}$ à la fréquence $f_0$ correspond donc à un état bas du signal numérique de données $S_{nd}$, alors qu'une portion 22 du signal numérique modulé en fréquence $S_{nm}$ à la fréquence $f_1$ correspond à un état haut du signal numérique de données $S_{nd}$.

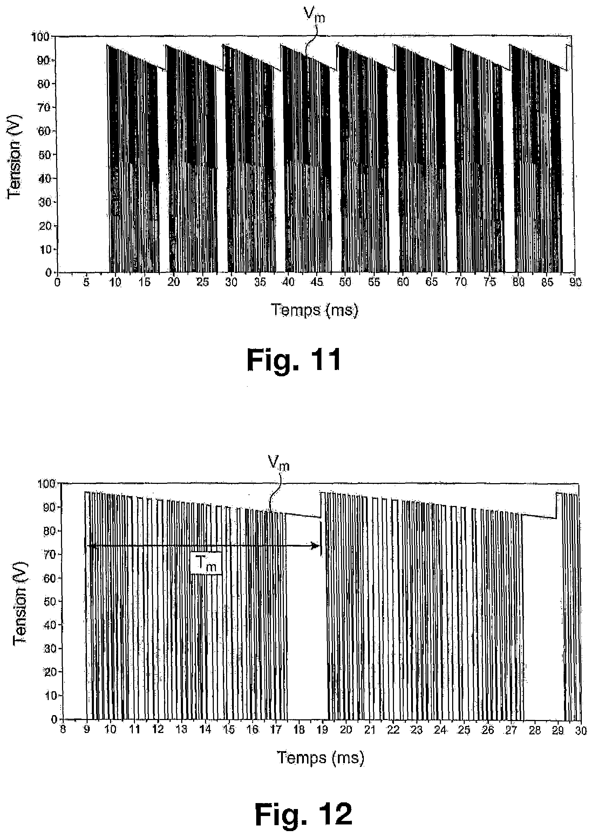

Le signal numérique modulé en fréquence $S_{nm}$ et la tension porteuse $V_p$ sont appliqués sur les entrées d'un multiplieur 23 (ou d'un mélangeur) qui module la tension porteuse $V_p$ en fonction du signal numérique modulé en fréquence $S_{nm}$ et donc en fonction du signal numérique de données $S_{nd}$ pour générer une tension modulée $V_m$. La tension modulée $V_m$, de période $T_m$, est visible sur les figures 11 et 12.

La tension modulée $V_m$ est amplifiée par un amplificateur 24 et appliquée aux bornes des diodes électroluminescentes 5 qui émettent le signal lumineux modulé Li-Fi 25. Le signal lumineux modulé Li-Fi 25 éclaire la pièce et transmet les données de position de la lampe à LED 2 et l'adresse MAC de la lampe à LED 2 ainsi qu'une pluralité de données.

Avantageusement, un réflecteur 26 est disposé au regard de la disposition matricielle de diodes électroluminescentes 5. Le réflecteur 26 permet d'homogénéiser la distribution de la lumière à l'intérieur du cône lumineux 3.

Avantageusement, la détection des passages par zéro de la tension d'alimentation alternative $V_{ac}$ est aussi utilisée par le dispositif d'émission et par l'appareil de réception pour synchroniser l'appareil de réception avec le dispositif d'émission. Les moments où l'intensité du signal reçu par le récepteur est maximale sont acquis et utilisés à cet effet par le récepteur. La fréquence de ces maximums est le double de la fréquence de la tension du secteur.

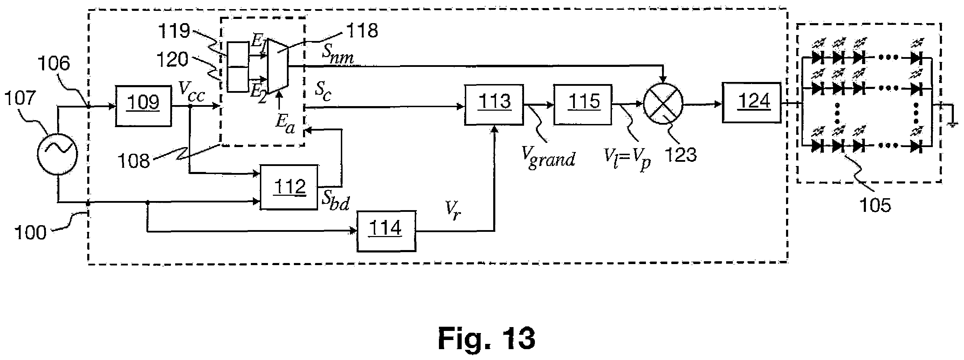

En référence à la figure 13, le dispositif d'émission selon un deuxième mode de réalisation de l'invention 100 comporte à nouveau une pluralité de diodes électroluminescentes 105 agencées selon une disposition matricielle de diodes électroluminescentes 105. Les diodes électroluminescentes 105 sont connectées en série et en parallèle.

Le dispositif d'émission 100 comporte des moyens de connexion 106 qui permettent de connecter le dispositif d'émission 100 directement à une source externe 107 d'une tension alternative d'alimentation $V_{ac}$, qui est en l'occurrence la tension du secteur. Le dispositif d'émission 100 est donc alimenté par une tension d'alimentation alternative $V_{ac}$ d'amplitude élevée, qui permet au dispositif d'émission 100 de mettre en oeuvre l'éclairage et l'émission des signaux Li-Fi.

Le fonctionnement du dispositif d'émission 100 est géré par des moyens de traitement qui comprennent un microcontrôleur 108. Le microcontrôleur 108 est alimenté par une tension d'alimentation continue $V_{cc}$ de faible amplitude, ici égale à 5 volts. La tension d'alimentation continue $V_{cc}$ est générée à partir de la tension alternative $V_{ac}$ par des moyens de conversion 109 qui comportent un limiteur de courant, un réseau de composants passifs et un régulateur linéaire.

La puissance électrique (et donc le courant et la tension) nécessaire à l'éclairage et à l'émission des signaux Li-Fi est issue de la tension d'alimentation alternative $V_{ac}$. Pour exploiter la tension d'alimentation alternative $V_{ac}$, le dispositif d'émission 100 comporte un détecteur de passage par zéro 112, un gradateur commandé par angle de phase 113, un redresseur 114 et des moyens de filtrage 115.

On note que les puissances mises en oeuvre dans le dispositif d'émission selon le deuxième mode de réalisation de l'invention 100 sont relativement faibles. Le gradateur 113 comporte des composants bien adaptés à des puissances faibles, et, en particulier, des transistors de type MOSFET.

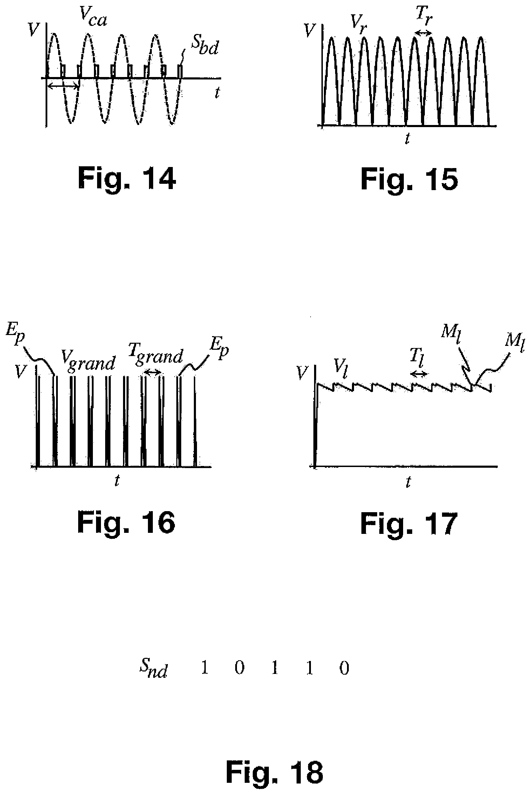

Le détecteur de passage par zéro 112, relié aux moyens de connexion 106, détecte les passages par zéro de la tension d'alimentation alternative $V_{ac}$ et génère un signal binaire de détection $S_{bd}$ qui présente un niveau haut au moment du passage à zéro de la tension d'alimentation alternative $V_{ac}$ et un niveau bas sinon. La tension d'alimentation alternative $V_{ac}$ et le signal binaire de détection $S_{bd}$ sont aussi visibles sur la figure 14.

Le signal binaire de détection $S_{bd}$ est transmis par le détecteur de passage par zéro 112 au microcontrôleur 108 qui génère à partir du signal binaire de détection $S_{bd}$ un signal de commande $S_c$ du gradateur 113 synchronisé sur les passages par zéro de la tension d'alimentation alternative $V_{ac}$.

Le redresseur 114 redresse la tension d'alimentation alternative $V_{ac}$ pour produire une tension redressée $V_r$, visible sur la figure 15. La période $T_r$ de la tension redressée $V_r$ est égale à la moitié de la période de la tension d'alimentation alternative Vac.

La tension redressée $V_r$ est appliquée en entrée du gradateur 113 qui est commandé par le signal de commande $S_c$.

Le signal de commande $S_c$ du gradateur 113 définit un rapport cyclique d'une tension alternative $V_{grad}$ en sortie du gradateur 113, visible sur la figure 16, de période $T_{grad}$ égale à la moitié d'une période de la tension d'alimentation alternative $V_{ac}$.

La tension $V_{grad}$ en sortie du gradateur 113, visible sur la figure 16, est formée par une succession d'ensembles Ep comprenant chacun deux pics. Chaque ensemble Ep de deux pics résulte du fait que l'amplitude de la courbe $V_r$ décroît vers zéro puis croît avec des pentes très importantes.

Dans la chaîne de traitement du deuxième mode de réalisation, le gradateur 113 est donc situé en aval du redresseur 114 : le gradateur 113 est plus proche de la sortie de la chaîne de traitement (des diodes), et la sortie du redresseur 114 est reliée à l'entrée du gradateur 113.

La tension $V_{grad}$ en sortie du gradateur 113 est ensuite lissée par les moyens de filtrage 115 pour obtenir une tension lissée $V_l$ (visible sur la figure 17), suffisamment stable, de période $T_l$ égale à la période $T_{grad}$.

L'influence de chaque ensemble Ep de deux pics est bien visible sur la figure 17. La tension lissée Vl présente en effet une forme en dents de scie, chaque dent comportant une partie supérieure et une pente. Chaque partie supérieure présente deux maximums locaux $M_l$ provenant d'un ensemble Ep de deux pics.

La tension lissée $V_l$ forme une tension porteuse analogique $V_p$ dont l'amplitude est réglable par le microcontrôleur 108 en faisant varier le rapport cyclique de la tension alternative $V_{grad}$ en sortie du gradateur 113 en utilisant $S_c$. La fréquence de la tension porteuse $V_p$ est égale au double de la fréquence de la tension d'alimentation alternative $V_{ac}$.

On note que la présence des ensembles Ep de deux pics permet de maintenir la tension lissée $V_l$ à un niveau plus haut que dans le cas du premier mode de réalisation de l'invention. Dans chaque période $T_l$; lorsque la fonction en dent de scie commence à décroître, la pente est interrompue par les maximums locaux Ml provenant des deux pics. La pente résultante est donc plus faible. On diminue ainsi le facteur de lissage.

On note aussi que la pente de chaque dent présente une durée réduite par rapport à la pente des dents de la figure 6 relative au premier mode de réalisation. Les condensateurs utilisés pour le lissage du deuxième mode de réalisation, qui stockent et libèrent de l'énergie au cours du lissage, ont donc une valeur de capacité et donc une taille réduite par rapport à ceux utilisés dans le premier mode de réalisation. La taille du dispositif d'émission selon le deuxième mode de réalisation de l'invention 100 est donc réduite par rapport à celle du dispositif d'émission selon le premier mode de réalisation de l'invention 1.

Le signal Li-Fi est un signal lumineux modulé contenant un signal numérique de données $S_{nd}$ généré par le microcontrôleur 108 à partir des données à émettre.

Le signal numérique de données $S_{nd}$, visible sur la figure 18, est formé par une succession d'états hauts et d'états bas. Le signal numérique de données $S_{nd}$ est transformé par le microcontrôleur 108 en un signal numérique modulé en fréquence $S_{nm}$ (modulation FSK, pour « Frequency-Shift Keying »).

Le microcontrôleur 108 exécute à cet effet un multiplexeur numérique 118 (visible sur la figure 13) présentant une première entrée de données $E_1$, une deuxième entrée de données $E_2$, une entrée d'adresse $E_a$ et une sortie S.

La première entrée de données $E_1$ pointe vers une première zone mémoire 119 dans laquelle est stockée une fréquence basse $f_0$ (ou fréquence « space ») :

$$f_0 = 1 / T_0.$$

La deuxième entrée de données $E_2$ pointe vers une deuxième zone mémoire 120 dans laquelle est stockée une fréquence haute $f_1$ (ou fréquence « mark ») :

$$f_1 = 1 / T_1.$$

Le signal numérique de données $S_{nd}$ est appliqué sur l'entrée d'adresse $E_a$.

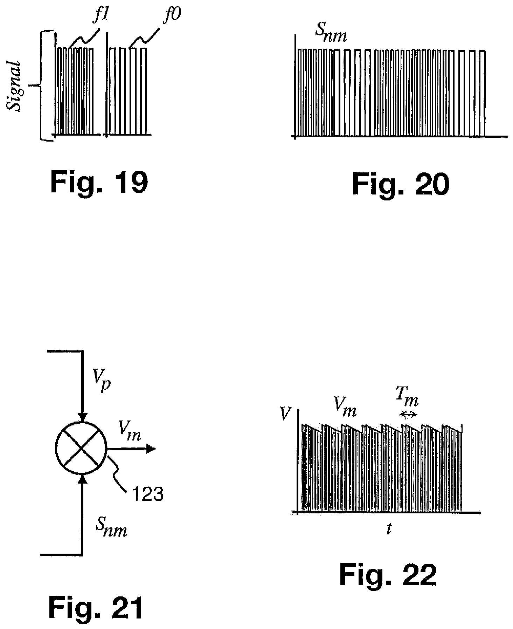

Lorsque le signal numérique de données $S_{nd}$ présente un état bas, le multiplexeur numérique 118 sélectionne la première entrée de données $E_1$ et un signal binaire basse fréquence $S_{bf}$ de fréquence $f_0$ (visible sur la figure 19) est généré en sortie S du multiplexeur numérique 118.

Lorsque le signal numérique de données $S_{nd}$ présente un état haut, le multiplexeur numérique 18 sélectionne la deuxième entrée de données $E_2$ et un signal binaire haute fréquence $S_{hf}$ de fréquence $f_1$ (visible sur la figure 19) est généré en sortie S du multiplexeur 118.

Le signal numérique modulé en fréquence $S_{nm}$ (visible aussi sur la figure 20) est ainsi produit par le multiplexeur numérique 118 et donc par le microcontrôleur 108.

Une portion du signal numérique modulé en fréquence $S_{nm}$ à la fréquence $f_0$ correspond donc à un état bas du signal numérique de données $S_{nd}$, alors qu'une portion du signal numérique modulé en fréquence $S_{nm}$ à la fréquence $f_1$ correspond à un état haut du signal numérique de données $S_{nd}$.

Le signal numérique modulé en fréquence $S_{nm}$ et la tension porteuse $V_p$ sont appliqués sur les entrées d'un multiplieur 123 (ou d'un mélangeur), visible sur les figures 13 et 21, qui module la tension porteuse $V_p$ en fonction du signal numérique modulé en fréquence $S_{nm}$

et donc en fonction du signal numérique de données $S_{nd}$ pour générer une tension modulée $V_m$. La tension modulée $V_m$, de période $T_m$, est visible sur la figure 22.

La tension modulée $V_m$ est amplifiée par un amplificateur 124 et appliquée aux bornes des diodes électroluminescentes 105 qui émettent le signal lumineux modulé Li-Fi 125.

Avantageusement, comme cela a été décrit dans le premier mode de réalisation, un réflecteur est disposé au regard de la disposition matricielle de diodes électroluminescentes 1,05.

Avantageusement, comme cela a été décrit dans le premier mode de réalisation, la détection des passages par zéro de la tension d'alimentation alternative $V_{ac}$ est aussi utilisée par le dispositif d'émission et par l'appareil de réception pour synchroniser l'appareil de réception avec le dispositif d'émission.

Bien entendu, l'invention n'est pas limitée aux modes de réalisation décrits, mais englobe toute variante entrant dans le champ de l'invention telle que définie par les revendications.

Bien que l'on ait indiqué que le dispositif d'émission de l'invention et la lampe à LED comportent une pluralité de diodes électroluminescentes dans une disposition matricielle en série et en parallèle, il est bien sûr possible de prévoir une disposition différente de diodes électroluminescentes : en série uniquement ou en parallèle uniquement. L'invention s'applique en particulier à des lampes à LED comportant une seule diode électroluminescente, ou bien plusieurs dizaines de diodes électroluminescentes.

Bien que l'on ait indiqué que le gradateur est un gradateur commandé par angle de phase, on pourrait aussi utiliser un gradateur différent, tel qu'un gradateur commandé par train d'onde.

Bien que les moyens de traitement décrits comportent un microcontrôleur, ceux-ci pourraient parfaitement comporter un FPGA, un DSP, un processeur, etc.

De même, à la place d'une modulation en fréquence, il aurait été possible de mettre en oeuvre une modulation différente, par exemple une modulation en position d'impulsions ou une modulation en tout-ou-rien ou une modulation OFDM (pour « Orthogonal frequency-division multiplexing »).

## Revendications

1. Dispositif d'émission d'un signal lumineux modulé de type signal Li-Fi comportant :

   - des moyens de connexion (6) à une source externe (7) d'une tension d'alimentation alternative ($V_{ac}$) ;
   - un gradateur (13) et un redresseur (14) utilisés pour transformer la tension d'alimentation alternative en une tension porteuse analogique et d'amplitude réglable, le redresseur étant relié à une sortie du gradateur ;
   - des moyens de traitement (8) destinés à piloter le gradateur pour régler l'amplitude de la tension porteuse ($V_p$) et à générer un signal électrique numérique de données ;
   - un détecteur de passage par zéro (12) de la tension d'alimentation alternative, le détecteur de passage par zéro étant agencé pour générer un signal binaire de détection ($S_{bd}$) à partir des passages par zéro de la tension d'alimentation alternative, les moyens de traitement étant agencés pour piloter le gradateur à partir du signal binaire de détection ;
   - des moyens de modulation (18, 23) destinés à moduler la tension porteuse en fonction du signal numérique de données pour générer une tension modulée ;
   - au moins une diode électroluminescente (5) comprenant des bornes entre lesquelles la tension modulée est appliquée pour générer le signal lumineux modulé.

2. Dispositif d'émission selon la revendication 1, dans lequel une fréquence de la tension porteuse est égale au double d'une fréquence de la tension d'alimentation alternative.

3. Dispositif d'émission selon la revendication 1, comportant en outre des moyens de filtrage (15) en sortie du redresseur destinés à lisser la tension porteuse.

4. Dispositif d'émission selon la revendication 1, dans lequel la tension modulée est modulée selon une modulation de fréquence ou une modulation en position d'impulsions ou une modulation en tout-ou-rien ou une modulation OFDM.

5. Dispositif d'émission selon la revendication 1, dans lequel les moyens de traitement comportent un microcontrôleur ou un FPGA ou un DSP.

6. Dispositif d'émission selon la revendication 1, dans lequel les moyens de modulation comportent un multiplieur (23).

7. Dispositif d'émission selon la revendication 1, comportant en outre un amplificateur (24) connecté en sortie des moyens de modulation pour amplifier la tension modulée.

8. Dispositif d'émission selon la revendication 1, dans lequel le signal électrique numérique de données comporte un identifiant de type adresse MAC.

9. Dispositif d'émission selon la revendication 1, comportant en outre un réflecteur (26) disposé au regard de au moins une diode électroluminescente.

**10.** Lampe à diodes électroluminescentes comportant un dispositif d'émission selon l'une des revendications précédentes.

**11.** Système de communication par signaux lumineux modulé de type signal Li-Fi comportant un dispositif d'émission selon l'une des revendications 1 à 9 et un appareil de réception, l'appareil de réception étant synchronisé avec le dispositif d'émission grâce à une détection de passages par zéro de la tension d'alimentation alternative.

## Patentansprüche

**1.** Sendevorrichtung zum Aussenden eines modulierten Lichtsignals vom Typ Li-Fi-Signal, umfassend:

- Verbindungsmittel (6) zur Verbindung mit einer externen Quelle (7) mit einer Versorgungswechselspannung ($V_{ac}$);
- einen Dimmer (13) und einen Gleichrichter (14), die verwendet werden, um die Versorgungswechselspannung in eine analoge Trägerspannung mit einstellbarer Amplitude umzuwandeln, wobei der Gleichrichter mit einem Ausgang des Dimmers verbunden ist;
- Verarbeitungsmittel (8), die dazu bestimmt sind, den Dimmer zu steuern, um die Amplitude der Trägerspannung ($V_p$) zu regeln und ein digitales elektrisches Datensignal zu erzeugen;
- einen Nulldurchgangsdetektor (12) für die Versorgungswechselspannung, wobei der Nulldurchgangsdetektor ausgebildet ist, um ein binäres Detektionssignal ($S_{bd}$) anhand der Nulldurchgänge der Versorgungswechselspannung zu erzeugen, wobei die Verarbeitungsmittel ausgebildet sind, um den Dimmer anhand des binären Detektionssignals zu steuern;
- Modulationsmittel (18, 23), die dazu bestimmt sind, die Trägerspannung in Abhängigkeit des digitalen Datensignals zu modulieren, um eine modulierte Spannung zu erzeugen;
- mindestens eine Leuchtdiode (5), die Klemmen umfasst, zwischen denen die modulierte Spannung angelegt wird, um das modulierte Lichtsignal zu erzeugen.

**2.** Sendevorrichtung nach Anspruch 1, bei der eine Frequenz der Trägerspannung gleich dem Doppelten einer Frequenz der Versorgungswechselspannung ist.

**3.** Sendevorrichtung nach Anspruch 1, ferner umfassend Filtermittel (15) am Ausgang des Gleichrichters, die dazu bestimmt sind, die Trägerspannung zu glätten.

**4.** Sendevorrichtung nach Anspruch 1, bei der die modulierte Spannung gemäß einer Frequenzmodulation oder einer Pulslagenmodulation oder einer Ein-Aus-Modulation oder einer OFDM-Modulation moduliert wird.

**5.** Sendevorrichtung nach Anspruch 1, bei der die Verarbeitungsmittel einen Mikrocontroller oder ein FPGA oder einen DSP umfassen.

**6.** Sendevorrichtung nach Anspruch 1, bei der die Modulationsmittel einen Multiplizierer (23) umfassen.

**7.** Sendevorrichtung nach Anspruch 1, ferner umfassend einen Verstärker (24), der am Ausgang der Modulationsmittel angeschlossen ist, um die modulierte Spannung zu verstärken.

**8.** Sendevorrichtung nach Anspruch 1, bei der das digitale elektrische Datensignal eine Kennung vom Typ MAC-Adresse umfasst.

**9.** Sendevorrichtung nach Anspruch 1, ferner umfassend einen Reflektor (26), der gegenüber mindestens einer Leuchtdiode angeordnet ist.

**10.** Leuchtdioden-Lampe, umfassend eine Sendevorrichtung nach einem der vorhergehenden Ansprüche.

**11.** System zur Kommunikation mittels modulierter Lichtsignale vom Typ Li-Fi-Signal, umfassend eine Sendevorrichtung nach einem der Ansprüche 1 bis 9 und ein Empfangsgerät, wobei das Empfangsgerät dank einer Erfassung von Nulldurchgängen der Versorgungswechselspannung mit der Sendevorrichtung synchronisiert ist.

## Claims

**1.** Device for emitting a modulated light signal of Li-Fi signal type including:

- connection means (6) to an external source (7) of an AC supply voltage ($V_{ac}$);
- a dimmer (13) and a rectifier (14) used to transform the AC supply voltage into an analog carrier voltage of adjustable amplitude, the rectifier being connected to an output of the dimmer;
- processing means (8) for controlling the dimmer to adjust the amplitude of the carrier voltage ($V_p$) and generating an electrical digital data signal;
- a zero crossing detector (12) of the AC supply voltage, the zero crossing detector being adapted to generate a binary detection signal ($S_{bd}$) from zero crossings of the AC supply voltage, the processing means being adapted to control the dimmer on the basis of the binary detection signal;
- modulation means (18, 23) for modulating the carrier voltage as a function of the digital data signal to generate a modulated voltage;
- at least one light-emitting diode (5) including terminals between which the modulated voltage is applied to generate the modulated light signal.

**2.** Emitter device according to claim 1, wherein a frequency of the carrier voltage is twice a frequency of the AC supply voltage.

**3.** Emitter device according to claim 1, further including filter means (15) at the output of the rectifier for smoothing the carrier voltage.

**4.** Emitter device according to claim 1, wherein the modulated voltage is frequency modulated or pulse position modulated or on-off modulated or OFDM modulated.

**5.** Emitter device according to claim 1, wherein the processing means include a microcontroller or an FPGA or a DSP.

**6.** Emitter device according to claim 1, wherein the modulation means include a multiplier (23).

**7.** Emitter device according to claim 1, further including an amplifier (24) connected at the output of the modulation means for amplifying the modulated voltage.

**8.** Emitter device according to claim 1, wherein the electrical digital data signal includes an MAC address type identifier.

**9.** Emitter device according to claim 1, further including a reflector (26) disposed facing the at least one light-emitting diode.

**10.** Light-emitting diode lamp including an emitter device according to any one of the preceding claims.

**11.** Li-Fi signal type modulated light signal communication system including an emitter device according to any one of claims 1 to 9 and a receiver device, the receiver device being synchronized with the emitter device by detecting zero crossings of the AC supply voltage.

1
2
3
4
8
9
12
13
14
15
18
19
20
23
24
25
26
5
6
7
0
1
$V_{ac}$
$V_{cc}$
$E_1$
$E_2$
$E_a$
S
$S_c$
$S_{nm}$
$S_{nd}$
$S_{bd}$
$V_{grad}$
$V_r$
$V_1 = V_p$
$V_m$

Fig. 1

Fig. 2

Tension (V)
Temps (ms)
$S_{bd}$
$V_{ac}$
400
300
200
100
0
-100
-200
-300
-400
0
5
10
15
20
25
30
35
40
45
50
55
60
65
70
75
80
85
90

Fig. 3

Tension (V)
Temps (ms)
$V_{grad}$
$T_{grad}$
100
80
60
40
20
0
-20
-40
-60
-80
-100
0
5
10
15
20
25
30
35
40
45
50
55
60
65
70
75
80
85
90

Fig. 4

Tension (V)
100
90
80
70
60
50
40
30
20
10
0
$V_r$
$T_r$
0
5
10
15
20
25
30
35
40
45
50
55
60
65
70
75
80
85
90
Temps (ms)


**Fig. 5**

Tension (V)
100
90
80
70
60
50
40
30
20
10
0
$T_l$
$V_l = V_p$
0
5
10
15
20
25
30
35
40
45
50
55
60
65
70
75
80
85
90
Temps (ms)


**Fig. 6**

Tension (V)
Temps (ms)
$S_{nd}$
0
0.5
1
1.5
2
2.5
3
3.5
4
4.5
5
5.5
6
6.5
7
7.5
8
8.5
9

Fig. 7

$S_{bf}$
$T_0 = 1/f_0$
Tension (V)
Temps (ms)
0
0.5
1
1.5
2
2.5
3
3.5
4
4.5
5
5.5
6
6.5
7
7.5
8
8.5
9

Fig. 8

$S_{hf}$
$T_1 = 1/f_1$
Tension (V)
Temps (ms)
0
0,5
1
1,5
2
2,5
3
3,5
4
4,5
5
5,5
6
6,5
7
7,5
8
8,5
9

**Fig. 9**

$S_{nm}$
22
21
Tension (V)
Temps (ms)
0
0,5
1
1,5
2
2,5
3
3,5
4
4,5
5
5,5
6
6,5
7
7,5
8
8,5
9

**Fig. 10**

Vm
Tension (V)
100
90
80
70
60
50
40
30
20
10
0
0
5
10
15
20
25
30
35
40
45
50
55
60
65
70
75
80
85
90
Temps (ms)

**Fig. 11**

Vm
Tm
Tension (V)
100
90
80
70
60
50
40
30
20
10
0
8
9
10
11
12
13
14
15
16
17
18
19
20
21
22
23
24
25
26
27
28
29
30
Temps (ms)

**Fig. 12**

105
124
123
$V_l=V_p$
115
$V_{grand}$
113
$V_r$
114
118
$S_{nm}$
$S_c$
$S_{bd}$
112
$E_1$
$E_2$
$E_a$
119
120
$V_{cc}$
109
108
106
107
100


Fig. 13

V
$V_{ca}$
$S_{bd}$
t


Fig. 14

V
$V_r$
$T_r$
t


Fig. 15

$E_p$
V
$V_{grand}$
$T_{grand}$
$E_p$
t


Fig. 16

V
$V_l$
$T_l$
$M_l$
$M_l$
t


Fig. 17

$S_{nd}$ 1 0 1 1 0

Fig. 18

f1
f0
Signal

Fig. 19

$S_{nm}$

Fig. 20

$V_p$
$V_m$
123
$S_{nm}$

Fig. 21

V
$V_m$
$T_m$
t

Fig. 22

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 2015288453 A